(19) Europäisches Patentamt / European Patent Office / Office européen des brevets

(11) **EP 4 328 356 A1**

(12) **EUROPEAN PATENT APPLICATION**
published in accordance with Art. 153(4) EPC

(43) Date of publication:
**28.02.2024 Bulletin 2024/09**

(21) Application number: **21937970.8**

(22) Date of filing: **09.12.2021**

(51) International Patent Classification (IPC):
$C25B\ 9/05^{(2021.01)}$    $C01B\ 3/00^{(2006.01)}$
$C25B\ 1/02^{(2006.01)}$    $C25B\ 9/00^{(2021.01)}$
$C25B\ 9/23^{(2021.01)}$    $C25B\ 15/00^{(2006.01)}$
$C25B\ 15/021^{(2021.01)}$    $C25B\ 15/023^{(2021.01)}$

(52) Cooperative Patent Classification (CPC):
C01B 3/00; C25B 1/02; C25B 9/00; C25B 9/05;
C25B 9/23; C25B 9/60; C25B 9/67; C25B 15/00;
C25B 15/02; C25B 15/021; C25B 15/023;
C25B 15/025; C25B 15/027; Y02E 60/50

(86) International application number:
**PCT/JP2021/045238**

(87) International publication number:
**WO 2022/224480 (27.10.2022 Gazette 2022/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.04.2021 JP 2021070900**

(71) Applicant: **Panasonic Intellectual Property
Management Co., Ltd.
Kadoma-shi, Osaka 571-0057 (JP)**

(72) Inventors:
• **KAKUWA Takashi
Kadoma-shi, Osaka 571-0057 (JP)**
• **SAKAI Osamu
Kadoma-shi, Osaka 571-0057 (JP)**
• **KITA Hiromi
Kadoma-shi, Osaka 571-0057 (JP)**

(74) Representative: **Grünecker Patent- und
Rechtsanwälte
PartG mbB
Leopoldstraße 4
80802 München (DE)**

(54) **COMPRESSION DEVICE AND CONTROL METHOD FOR COMPRESSION DEVICE**

(57) A compressor device includes: a compressor that causes, by applying a voltage between an anode and a cathode, hydrogen in a hydrogen-containing gas supplied to the anode to move through an electrolyte membrane to the cathode and compresses the hydrogen; a first regulator that regulates the dew point of the hydrogen-containing gas to be supplied to the anode; a second regulator that regulates the temperature of the hydrogen-containing gas to be supplied to the anode; and a controller that controls at least one of the first regulator or the second regulator based on the pressure of the hydrogen-containing gas to be supplied to the anode.

FIG. 1

EP 4 328 356 A1

**Description**

Technical Field

The present disclosure relates to a compressor device and a method for controlling the compressor device.

Background Art

In recent years, carbon-free fuel cell vehicles that run by driving a motor using electric power generated by the fuel cell are receiving attention as one of the measures against global warming. However, a problem in achieving widespread use of the fuel cell vehicles is how to provide an infrastructure for supplying hydrogen used as fuel and how to build hydrogen stations as many as possible over a wide area in the country. In particular, hydrogen purifying compressor devices are large and require a huge installation cost, and this impedes nation-wide installation of hydrogen stations.

In the coming carbon-free hydrogen society, there is a need not only for development of a technique for producing hydrogen but also for development of a technique for storing hydrogen at high density and allowing a small volume of hydrogen to be transported or utilized at low cost. In particular, to supply hydrogen to the fuel supply infrastructure stably, various proposals for obtaining highly purified hydrogen gas and boosting the pressure of the hydrogen gas have been made.

Generally, a high-pressure hydrogen gas compressed to several tens of MPa is used as a fuel gas of fuel cell vehicles etc. The high-pressure hydrogen gas can be obtained, for example, by producing a low-pressure hydrogen gas in a water electrolyzer through an electrochemical reaction and then compressing the hydrogen to high pressure using a mechanical compressor device.

In view of the above, PTL 1 and PTL 2 propose electrochemical compressor devices that can purify and compress hydrogen in a cathode by supplying a low-pressure hydrogen-containing gas composed mainly of hydrogen to an anode and causing only hydrogen to pass through an electrolyte membrane.

In this method, the electrolyte membrane is used in order to compress the low-pressure hydrogen-containing gas, and electrode catalyst layers used as the anode and the cathode are disposed on the opposite sides of the electrolyte membrane. An anode feeder and a cathode feeder are disposed on the respective electrode catalyst layers. A layered body including the anode feeder, the cathode feeder, and the electrolyte membrane is held between an anode separator and a cathode separator to thereby form an electrochemical cell. A flow passage for supplying the low-pressure hydrogen-containing gas to the anode from the outside and a flow passage for leading an excess of the hydrogen-containing gas from the anode to the outside are provided in the anode separator. A flow passage for leading the high-pressure cathode gas (hydrogen gas) compressed in the cathode to the outside is provided in the cathode separator.

PTL 1 proposes that, when the temperature of the electrochemical cell increases during compression of the hydrogen-containing gas in the cell because of the heat of condensation of water vapor or heat generated by IR loss caused by the resistance of the electrolyte membrane, the dew point of the hydrogen-containing gas is increased so that the electrolyte membrane can be humidified appropriately at startup of the system.

PTL 2 proposes that, during the hydrogen compression operation of the compressor device, the relative humidity of the hydrogen-containing gas in the anode or the cathode gas in the cathode is appropriately increased. Specifically, in the proposed control, the relative humidity of any of the above gases is increased intermittently or based on a signal indicating an increase in voltage etc. during the hydrogen compression operation such that the reduction in the content of water in the electrolyte membrane caused by the flow of water present inside the electrochemical cell to the outside can be mitigated.

Citation List

Patent Literature

PTL 1: Japanese Patent No. 6765060
PTL 2: Japanese Unexamined Patent Application Publication No. 2019-210205

Summary of Invention

Technical Problem

It is an object of the present disclosure to provide a compressor device in which, for example, the relative humidity of the hydrogen-containing gas to be supplied to the anode can be controlled more appropriately than in the conventional techniques and to provide a method for controlling the compressor device.

Solution to Problem

A compressor device in one aspect of the present disclosure includes: a compressor that causes, by applying a voltage between an anode and a cathode, hydrogen in a hydrogen-containing gas supplied to the anode to move through an electrolyte membrane to the cathode and compresses the hydrogen; a first regulator that regulates the dew point of the hydrogen-containing gas to be supplied to the anode; a second regulator that regulates the temperature of the hydrogen-containing gas to be supplied to the anode; and a controller that controls at least one of the first regulator or the second regulator based on the pressure of the hydrogen-containing gas to be supplied to the anode.
A method for controlling a compressor device in another aspect of the present disclosure includes the step of causing, by applying a voltage between an anode and a cathode, hydrogen in a hydrogen-containing gas supplied to the anode to move to the cathode through an electrolyte membrane and compressing the hydrogen, wherein, in the step of applying, at least one of the dew point of the hydrogen-containing gas to be supplied to the anode or the temperature thereof is controlled based on the pressure of the hydrogen-containing gas to be supplied to the anode.

Advantageous Effects of Invention

In the compressor device and the compressor device controlling method in the above aspects of the present disclosure, the relative humidity of the hydrogen-containing gas to be supplied to the anode can be controlled more appropriately than in the conventional techniques.

Brief Description of Drawings

[Fig. 1] Fig. 1 is an illustration showing an example of a compressor device in an embodiment.
[Fig. 2] Fig. 2 is an illustration showing an example of the flow of hydrogen and water (water vapor) in a hydrogen-containing gas in an electrochemical cell.
[Fig. 3] Fig. 3 is a graph showing an example of actual measurement data about the relative humidity of the hydrogen-containing gas when the pressure of the hydrogen-containing gas at the inlet of an anode is taken into consideration and the relative humidity when the pressure of the hydrogen-containing gas is not taken into consideration.
[Fig. 4] Fig. 4 is a flowchart in Control Example 1A of a compressor device in an Example of the embodiment.
[Fig. 5] Fig. 5 is a flowchart in Control Example 1B of the compressor device in the Example of the embodiment.
[Fig. 6] Fig. 6 is a graph showing Control Example 3A of the compressor device in the Example of the embodiment.
[Fig. 7] Fig. 7 is a flowchart in Control Example 3A of the compressor device in the Example of the embodiment.
[Fig. 8] Fig. 8 is a flowchart in Control Example 3B of the compressor device in the Example of the embodiment.

Description of Embodiment

In an electrochemical compressor using an electrolyte membrane, hydrogen ($H_2$) in an anode is converted to protons. Then the protons ($H^+$) are caused to move to a cathode and reconverted to hydrogen ($H_2$) in the cathode, and the hydrogen is thereby increased in pressure. In this case, for example, when the relative humidity of the hydrogen-containing gas in the anode of the compressor decreases, the electrolyte membrane may dry up. The drying up causes a reduction in the proton conductivity of the electrolyte membrane, and this may lead to an increase in the diffusion overpotential of the electrochemical cell. In contrast, when the relative humidity of the hydrogen-containing gas in the anode of the compressor increases, the amount of condensed water in the anode increases, and flooding occurs in the anode. This may lead to an increase in the diffusion overpotential of the electrochemical cell. It is therefore necessary to appropriately adjust the dew point or temperature of the anode gas. However, drying up or flooding cannot be prevented sufficiently only by monitoring the dew point or temperature of the anode gas and adjusting the value of the dew point or temperature.
Therefore, the present inventors have conducted extensive studies and found that, in a compressor device, by appropriately adjusting the dew point or temperature of the anode gas with consideration given to the pressure of the anode gas, the occurrence of drying up or flooding is reduced as compared with that in conventional techniques. This is due to the fact that, since the supply pressure of the anode gas in the compressor device is higher than that in fuel cells, the influence of the pressure of the anode gas on the relative humidity of the anode gas is not negligible. Since the current density in the electrochemical cell of the compressor device is higher than that in the fuel cells, the flow rate of the anode gas in the compressor device is accordingly high. Therefore, in the compressor device, the supply pressure of the anode gas is higher than that in the fuel cells.

Accordingly, a compressor device in a first aspect of the present disclosure includes: a compressor that causes, by applying a voltage between an anode and a cathode, hydrogen in a hydrogen-containing gas supplied to the anode to move through an electrolyte membrane to the cathode and compresses the hydrogen; a first regulator that regulates the dew point of the hydrogen-containing gas to be supplied to the anode; a second regulator that regulates the temperature of the hydrogen-containing gas to be supplied to the anode; and a controller that controls at least one of the first regulator or the second regulator based on the pressure of the hydrogen-containing gas to be supplied to the anode.

In the thus-configured compressor device in the present aspect, the relative humidity of the hydrogen-containing gas to be supplied to the anode can be adjusted more appropriately than in the conventional techniques. Specifically, when the pressure of the hydrogen-containing gas in the anode changes, the relative humidity of the hydrogen-containing gas changes. For example, when a prescribed pressure is applied to the hydrogen-containing gas, the higher the pressure applied, the lower the relative humidity of the hydrogen-containing gas. Therefore, when the dew point and temperature of the hydrogen-containing gas to be supplied to the anode are not adjusted according to the change in the pressure of the hydrogen-containing gas, drying up or flooding may occur.

However, in the compressor device in the present aspect, at least one of the first regulator or the second regulator is controlled based on the pressure of the hydrogen-containing gas to be supplied to the anode as described above, and the relative humidity of the hydrogen-containing gas to be supplied to the anode can be controlled more appropriately than when the above control is not performed. Therefore, in the compressor device in the present aspect, the occurrence of drying up of the electrolyte membrane or flooding in the anode can be reduced as compared with that when the above control is not performed.

According to a second aspect of the present disclosure, in the compressor device in the first aspect, when the pressure of the hydrogen-containing gas to be supplied to the anode increases, the controller may control the first regulator to increase the dew point of the hydrogen-containing gas to be supplied to the anode.

As the pressure of the hydrogen-containing gas to be supplied to the anode increases, the dew point of the hydrogen-containing gas at an inlet of the anode is increased. Therefore, the saturated water vapor pressure corresponding to the dew point of the hydrogen-containing gas after the increase in the pressure is higher than the saturated water vapor pressure of the hydrogen-containing gas that corresponds to the dew point of the hydrogen-containing gas before the increase in the pressure.

The relative humidity of the hydrogen-containing gas in the anode at a certain temperature is represented by the ratio of the amount of water vapor to the amount of saturated water vapor at this temperature. Therefore, as shown in formula (1) below, the relative humidity $Rh$ (%) of the hydrogen-containing gas to be supplied to the anode at the inlet of the anode with consideration given to the pressure $P$ of the hydrogen-containing gas is lower than the relative humidity $Rh_0$ (%) of the hydrogen-containing gas with no consideration given to the pressure $P$.

$$Rh = Rh_0 \times (P_0/(P_0 + P)) \quad (1)$$

In formula (1), $P_0$ is the atmospheric pressure (0.1013 MPa). $Rh_0$ is represented by the following general formula (2) with the temperature $T0$ and dew point $T$ of the hydrogen-containing gas used as variables.

$$Rh_0 = 10.0^{(C/(B/T + 1.0) - C/(B/T0 + 1.0))} \quad (2)$$

In formula (2), $C$ and $B$ are predetermined constants.

Therefore, in the case where the humidity state of the hydrogen-containing gas to be supplied to the anode is controlled with no consideration given to the change in the pressure of the hydrogen-containing gas to be supplied to the anode, when the pressure of the hydrogen-containing gas to be supplied to the anode increases, the relative humidity of the hydrogen-containing gas at the inlet of the anode decreases. In this case, drying up of the electrolyte membrane may occur.

However, in the compressor device in the present aspect, when the pressure of the hydrogen-containing gas to be supplied to the anode increases, the dew point of the hydrogen-containing gas to be supplied to the anode is increased, so that the possibility of the occurrence of drying up of the electrolyte membrane can be reduced.

According to a third aspect of the present disclosure, in the compressor device in the first or second aspect, when the pressure of the hydrogen-containing gas to be supplied to the anode increases, the controller may control the second regulator to reduce the temperature of the hydrogen-containing gas to be supplied to the anode.

As described above, in the case where the humidity state of the hydrogen-containing gas to be supplied to the anode is controlled with no consideration given to the change in the pressure of the hydrogen-containing gas to be supplied to the anode, when the pressure of the hydrogen-containing gas at the inlet of the anode increases, the relative humidity of the hydrogen-containing gas decreases. In this case, drying up of the electrolyte membrane may occur.

However, in the compressor device in the present aspect, when the pressure of the hydrogen-containing gas to be supplied to the anode increases, the temperature of the hydrogen-containing gas to be supplied to the anode is reduced, so that the possibility of the occurrence of drying up of the electrolyte membrane can be reduced.

According to a fourth aspect of the present disclosure, in the compressor device in any one of the first to third aspects, when the pressure of the hydrogen-containing gas to be supplied to the anode decreases, the controller may control the first regulator to reduce the dew point of the hydrogen-containing gas to be supplied to the anode.

As the pressure of the hydrogen-containing gas to be supplied to the anode decreases, the dew point of the hydrogen-containing gas at the inlet of the anode is reduced. Therefore, the saturated water vapor pressure corresponding to the dew point of the hydrogen-containing gas after the reduction in the pressure is lower than the saturated water vapor pressure of the hydrogen-containing gas that corresponds to the dew point of the hydrogen-containing gas before the reduction in the pressure.

The relative humidity of the hydrogen-containing gas in the anode at a certain temperature is represented by the ratio of the amount of water vapor to the amount of saturated water vapor at this temperature. Therefore, in the case where the humidity state of the hydrogen-containing gas to be supplied to the anode is controlled with no consideration given to the change in the pressure of the hydrogen-containing gas to be supplied to the anode, when the pressure of the hydrogen-containing gas to be supplied to the anode decreases, the relative humidity of the hydrogen-containing gas at the inlet of the anode increases. In this case, for example, the relative humidity of the hydrogen-containing gas is higher at the outlet of the anode than at the inlet of the anode. Therefore, the higher the relative humidity of the hydrogen-containing gas at the inlet of the anode, the more likely flooding is to occur at the outlet of the anode.

However, in the compressor device in the present aspect, when the pressure of the hydrogen-containing gas to be supplied to the anode decreases, the dew point of the hydrogen-containing gas to be supplied to the anode is reduced, so that the possibility of the occurrence of flooding at the outlet of the anode can be reduced.

According to a fifth aspect of the present disclosure, in the compressor device in any one of the first to fourth aspects, when the pressure of the hydrogen-containing gas to be supplied to the anode decreases, the controller may control the second regulator to increase the temperature of the hydrogen-containing gas to be supplied to the anode.

As described above, in the case where the humidity state of the hydrogen-containing gas to be supplied to the anode is controlled with no consideration given to the change in the pressure of the hydrogen-containing gas to be supplied to the anode, when the pressure of the hydrogen-containing gas to be supplied to the anode decreases, the relative humidity of the hydrogen-containing gas at the inlet of the anode increases. In this case, for example, the relative humidity of the hydrogen-containing gas is higher at the outlet of the anode than at the inlet of the anode. Therefore, as the relative humidity of the hydrogen-containing gas at the inlet of the anode increases, the more likely flooding is to occur the outlet of the anode.

However, in the compressor device in the present aspect, when the pressure of the hydrogen-containing gas to be supplied to the anode decreases, the temperature of the hydrogen-containing gas to be supplied to the anode is increased, so that the possibility of the occurrence of flooding at the outlet of the anode can be reduced.

A method for controlling a compressor device in a sixth aspect of the present disclosure includes the step of causing, by applying a voltage between an anode and a cathode, hydrogen in a hydrogen-containing gas supplied to the anode to move through an electrolyte membrane to the cathode and compressing the hydrogen, wherein, in the step of applying, at least one of the dew point of the hydrogen-containing gas to be supplied to the anode or the temperature thereof is controlled based on the pressure of the hydrogen-containing gas to be supplied to the anode.

In the method in the present aspect, the relative humidity of the hydrogen-containing gas to be supplied to the anode can be controlled more appropriately than in the conventional techniques. The details of the operational advantages of the compressor device controlling method in the present aspect are the same as the operational advantages of the compressor device in the first aspect, and the description thereof will be omitted.

According to a seventh aspect of the present disclosure, in the method in the sixth aspect, when the pressure of the hydrogen-containing gas to be supplied to the anode increases, the dew point of the hydrogen-containing gas to be supplied to the anode may be increased.

The operational advantages of the compressor device controlling method in the present aspect are the same as the operational advantages of the compressor device in the second aspect, and therefore the description thereof will be omitted.

According to an eighth aspect of the present disclosure, in the method in the sixth or seventh aspect, when the pressure of the hydrogen-containing gas to be supplied to the anode increases, the temperature of the hydrogen-containing gas to be supplied to the anode may be reduced.

The operational advantages of the compressor device controlling method in the present aspect are the same as the operational advantages of the compressor device in the third aspect, and therefore the description thereof will be omitted.

According to a ninth aspect of the present disclosure, in the method in any one of the sixth to eighth aspects, when the pressure of the hydrogen-containing gas to be supplied to the anode decreases, the dew point of the hydrogen-containing gas to be supplied to the anode may be reduced.

The operational advantages of the compressor device controlling method in the present aspect are the same as the operational advantages of the compressor device in the fourth aspect, and therefore the description thereof will be omitted.

According to a tenth aspect of the present disclosure, in the method in any one of the sixth to ninth aspects, when the pressure of the hydrogen-containing gas to be supplied to the anode decreases, the temperature of the hydrogen-containing gas to be supplied to the anode may be increased.

The operational advantages of the compressor device controlling method in the present aspect are the same as the operational advantages of the compressor device in the fifth aspect, and therefore the description thereof will be omitted.

An embodiment of the present disclosure will be described with reference to the drawings. The embodiment described below shows examples of the above aspects. Therefore, shapes, materials, components, arrangement positions of the components, and connection forms of the components, etc. shown below are merely examples and do not limit the aspects described above, unless these features are stated in the claims. Among the components in the following description, components not stated in independent claims defining the broadest concept of the aspects are described as optional components. In the drawings, descriptions of components with the same reference symbols may be omitted as appropriate. The drawings illustrate components schematically for the sake of facilitating understanding, and their shapes, dimensional ratio, etc. may not be accurately illustrated.

(Embodiment)

In the following embodiment, the structure and operation of an electrochemical hydrogen pump used as an example of the above-described compressor will be described.

[Device structure]

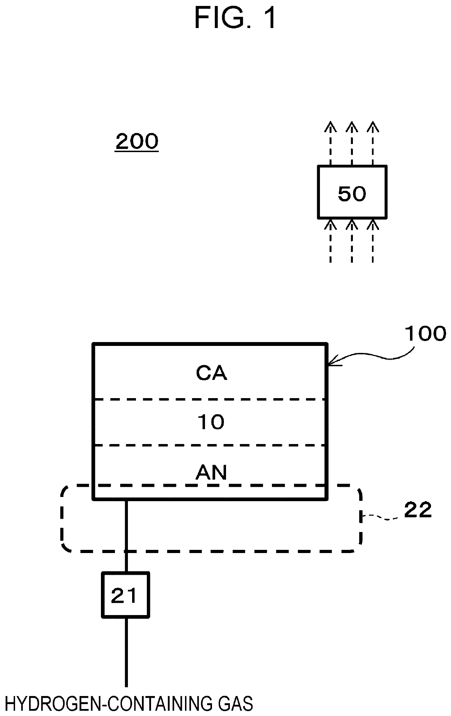

Fig. 1 is an illustration showing an example of a compressor device in the embodiment.

In the example shown in Fig. 1, the compressor device 200 includes an electrochemical hydrogen pump 100. An electrochemical cell of the electrochemical hydrogen pump 100 includes an electrolyte membrane 10, an anode AN, and a cathode CA. The electrochemical hydrogen pump 100 may include a stack including a plurality of such electrochemical cells stacked together.

The electrochemical hydrogen pump 100 is a device in which, when a voltage is applied between the anode AN and the cathode CA, hydrogen in a hydrogen-containing gas supplied to the anode AN is caused to move to the cathode CA through the electrolyte membrane 10 and compressed.

The hydrogen-containing gas used above may be a hydrogen gas generated in an unillustrated water electrolysis device or a reformed gas generated in an unillustrated reformer.

The details of the stack and the details of a voltage applicator for applying the voltage will be described later.

The anode AN is disposed on one of the principal surfaces of the electrolyte membrane 10. The anode AN is an electrode including an anode catalyst layer and an anode feeder. The cathode CA is disposed on the other principal surface of the electrolyte membrane 10. The cathode CA is an electrode including a cathode catalyst layer and a cathode feeder. In this manner, the electrolyte membrane 10 is held between the anode AN and the cathode CA so as to be in contact with each of the anode catalyst layer and the cathode catalyst layer.

The electrolyte membrane 10 may have any structure so long as the membrane has proton conductivity. Examples of the electrolyte membrane 10 include fluorine-based polymer electrolyte membranes and hydrocarbon-based electrolyte membranes. Specifically, the electrolyte membrane 10 used may be, for example, Nafion (registered trademark, a product of DuPont), Aciplex (registered trademark, a product of Asahi Kasei Corporation), etc., but this is not a limitation.

The anode catalyst layer is disposed on one of the principal surfaces of the electrolyte membrane 10. The anode catalyst layer contains carbon that can support a catalyst metal (e.g., platinum) in a dispersed state, but this is not a limitation.

The cathode catalyst layer is disposed on the other principal surface of the electrolyte membrane 10. The cathode catalyst layer contains carbon that can support a catalyst metal (e.g., platinum) in a dispersed state, but this is not a limitation.

No particular limitation is imposed on the methods for preparing the catalyst in the cathode catalyst layer and the catalyst in the anode catalyst layer, and any of various methods can be used. For example, a carbon-based powder may be used, and examples thereof include powders of graphite, carbon black, and electrically conductive activated carbon. No particular limitation is imposed on the method for causing platinum or another catalyst metal to be supported on a carbon carrier. For example, a method such as powder mixing or liquid phase mixing may be used. Examples of the liquid phase mixing include a method in which a carrier such as carbon is dispersed in a catalyst component colloidal solution so that the catalyst component adsorbs on the carrier. No particular limitation is imposed on the supported state of the catalyst metal such as platinum on the carrier. For example, the catalyst metal may be formed into fine particles, and the fine particles may be highly dispersed and supported on the carrier.

The cathode feeder is disposed on the cathode catalyst layer. The cathode feeder is formed of a porous material and has electrical conductivity and gas diffusibility. Preferably, the cathode feeder has elasticity that allows the cathode feeder to appropriately follow the displacement and deformation of components caused by the differential pressure between the cathode CA and the anode AN during the operation of the electrochemical hydrogen pump 100. For example, a carbon fiber sintered product can be used as the base material of the cathode feeder, but this is not a limitation.

The anode feeder is disposed on the anode catalyst layer. The anode feeder is formed of a porous material and has electrical conductivity and gas diffusibility. Preferably, the anode feeder has stiffness high enough to withstand the pressing force by the electrolyte membrane 10 due to the differential pressure during the operation of the electrochemical hydrogen pump 100. For example, a carbon particle sintered body or a titanium particle sintered body coated with a noble metal such as platinum can be used as the base material of the anode feeder, but this is not a limitation.

Although not shown in Fig. 1, members and devices necessary for the hydrogen compression operation of the electrochemical hydrogen pump 100 are appropriately provided.

For example, a pair of anode and cathode separators may be used to externally sandwich the anode AN and the cathode CA therebetween. In this case, the anode separator in contact with the anode AN is an electrically conductive plate-shaped member for supplying the hydrogen-containing gas to the anode AN and leading an excess of the hydrogen-containing gas from the anode AN. The plate-shaped member includes a serpentine gas flow passage (hereinafter referred to as a serpentine flow passage) through which the hydrogen-containing gas flows. The cathode separator in contact with the cathode CA is an electrically conductive plate-shaped member for leading hydrogen from the cathode CA. The plate-shape member includes a gas flow passage through which the hydrogen led from the cathode CA flows.

In the electrochemical hydrogen pump 100, sealing members such as gaskets are generally provided on both sides of the electrochemical cell so as to prevent the high-pressure hydrogen from leaking to the outside and integrated in advance with the electrochemical cell to assemble the electrochemical hydrogen pump 100. The anode and cathode separators are disposed on the outer side of the electrochemical cell to mechanically fix the electrochemical cell and electrically connect the electrochemical cell to adjacent electrochemical cells in series.

In a general stack structure, about 10 to about 200 electrochemical cells and anode and cathode separators are stacked alternately. The stack is held between end plates with current collectors and insulating plates interposed therebetween, and the end plates are tightened with tightening rods. In this case, to supply an appropriate amount of the hydrogen-containing gas to the serpentine flow passage of each of the anode separators, it is necessary that the anode separators be configured such that downstream ends of groove-shaped passages that branch off from an appropriate conduit are connected to the respective serpentine flow passages of the anode separators. The above configured conduit line is referred to as a manifold, and the manifold is composed of, for example, a series of through holes formed in appropriate portions of members included in the stack.

The electrochemical hydrogen pump 100 includes a voltage applicator that applies a voltage between the anode AN and the cathode CA. The voltage applicator may have any structure so long as the voltage can be applied between the anode AN and the cathode CA. Specifically, a high-potential-side terminal of the voltage applicator is connected to the anode AN, and a low-potential-side terminal of the voltage applicator is connected to the cathode CA. Examples of the voltage applicator include DC/DC converters and AC/DC converters. When the voltage applicator is connected to a DC power source such as a solar cell, a fuel cell, or a battery, a DC/DC convertor is used. When the voltage applicator is connected to an AC power source such as a commercial power source, an AC/DC converter is used. The voltage applicator may be, for example, an electric power-type power supply in which the voltage applied between the anode AN and the cathode CA and the current flowing between the anode AN and the cathode CA are controlled such that the electric power supplied to the electrochemical cell of the electrochemical hydrogen pump 100 is adjusted to a prescribed set value.

The above unillustrated members and devices are merely examples, and these examples are not limitations.

In the electrochemical hydrogen pump 100, the electrolyte membrane 10 generally exhibits desired proton conductivity when it is in a wet state. Therefore, to allow the efficiency of the hydrogen compression operation of the electrochemical hydrogen pump 100 to be maintained at a desired value, it is necessary to maintain the electrolyte membrane 10 in a wet state. Therefore, in many conventional electrochemical hydrogen pumps 100, a high-temperature high-humidity hydrogen-containing gas is supplied to the anode AN.

Accordingly, as shown in Fig. 1, the compressor device 200 in the present embodiment includes a first regulator 21, a second regulator 22, and a controller 50.

The first regulator 21 is a device that regulates the dew point of the hydrogen-containing gas to be supplied to the anode AN. The first regulator 21 may have any structure so long as it can regulate the dew point of the hydrogen-containing gas.

The first regulator 21 used may be, for example, a humidifier that humidifies the hydrogen-containing gas. The humidifier is, for example, a humidifier having a bubbler structure, but this is not a limitation.

When the first regulator 21 is a humidifier having a bubbler structure, the amount of moisture added to the hydrogen-containing gas by the first regulator 21 can be controlled by adjusting the temperature of warm water in a bubbling tank. Specifically, the dew point of the hydrogen-containing gas that has passed through the warm water in the bubbling tank is approximately equal to the temperature of the warm water. Moreover, the amount of moisture added to the hydrogen-containing gas can be controlled by adjusting the amount of the hydrogen-containing gas bypassing the bubbling tank.

As shown in Fig. 1, the first regulator 21 is disposed in a channel for supplying the hydrogen-containing gas. In this case, the downstream end of the channel for supplying the hydrogen-containing gas may be connected to any position that is in communication with the anode AN of the electrochemical hydrogen pump 100. When the electrochemical hydrogen pump 100 includes the stack described above, the downstream end of the channel for supplying the hydrogen-containing gas may be in communication with the manifold for introducing the hydrogen-containing gas.

The upstream end of the channel for supplying the hydrogen-containing gas may be connected to, for example, a supply source (not shown) of the hydrogen-containing gas. Examples of the supply source of the hydrogen-containing gas include, but not limited to, water electrolysis devices capable of generating a high-humidity hydrogen-containing gas through water electrolysis and reformers capable of generating a high-humidity hydrogen-containing gas through a reforming reaction of a hydrocarbon compound.

The second regulator 22 is a device that regulates the temperature of the hydrogen-containing gas to be supplied to the anode AN. The second regulator 22 may have any structure so long at it can regulate the temperature of the hydrogen-containing gas.

Examples of the second regulator 22 that can be used include a temperature controller disposed in the channel for supplying the hydrogen-containing gas, a temperature controller that controls the temperature of the hydrogen-containing gas in the electrochemical hydrogen pump 100 before the hydrogen-containing gas is supplied to the anode AN, and a temperature controller that controls the temperature of the hydrogen-containing gas flowing through the serpentine flow passage. These temperature controllers may each be a heater or a cooler. The heater may be, for example, an electric heater for heating the hydrogen-containing gas or may include a channel through which a heat medium for heating that can exchange heat with the hydrogen-containing gas flows. The cooler may include a channel through which a heat medium for cooling that can exchange heat with the hydrogen-containing gas flows.

The controller 50 controls at least one of the first regulator 21 or the second regulator 22 based on the pressure of the hydrogen-containing gas to be supplied to the anode AN.

The pressure of the hydrogen-containing gas to be supplied to the anode AN is detected by a suitable detector (not shown). The detector may be a detector that directly detects the pressure of the hydrogen-containing gas or a detector that indirectly detects the pressure of the hydrogen-containing gas. Examples of the former detector include pressure gauges. Examples of the latter detector include flowmeters that detect the flow rate of the hydrogen-containing gas.

The controller 50 includes, for example, an arithmetic circuit (not shown) and a storage circuit (not shown). Examples of the arithmetic circuit includes MPUs and CPUs. Examples of the storage circuit include memories. The controller 50 may be a single controller that performs centralized control or may include a plurality of controllers that perform decentralized control in a synergistic manner.

As described above, with the compressor device 200 in the present embodiment and the method for controlling the compressor device 200, the relative humidity of the hydrogen-containing gas to be supplied to the anode AN can be adjusted more appropriately than with conventional devices and methods. Specifically, when the pressure of the hydrogen-containing gas in the anode AN changes, the relative humidity of the hydrogen-containing gas changes. For example, when a prescribed pressure is applied to the hydrogen-containing gas, the higher the pressure applied, the lower the relative humidity of the hydrogen-containing gas. Therefore, when the dew point and temperature of the hydrogen-containing gas to be supplied to the anode AN are not controlled according to the change in the pressure of the hydrogen-containing gas, drying up or flooding may occur.

However, with the compressor device 200 in the present embodiment and the method for controlling the compressor device 200, at least one of the first regulator 21 or the second regulator 22 is controlled based on the pressure of the hydrogen-containing gas to be supplied to the anode AN as described above, and the relative humidity of the hydrogen-containing gas to be supplied to the anode AN can be controlled more appropriately than when the above control is not performed. Therefore, with the compressor device 200 in the present embodiment and the method for controlling the compressor device 200, the occurrence of drying up of the electrolyte membrane 10 or flooding in the anode AN can be reduced as compared with that when the above control is not performed.

(EXAMPLE)

When the relative humidity of the hydrogen-containing gas in the electrochemical cell of the electrochemical hydrogen pump 100 increases, condensation of water may occur in the anode of the electrochemical cell. Then the condensed water may lead to flooding in the anode AN, and this may cause a reduction in hydrogen diffusivity, so that the diffusion overpotential may increase.

In contrast, as the relative humidity of the hydrogen-containing gas in the electrochemical cell of the electrochemical hydrogen pump 100 decreases, it becomes more difficult to maintain the wet state of the electrolyte membrane 10 that is necessary to maintain high proton conductivity. In this case, drying up of the electrolyte membrane 10 is likely to occur. For example, it has been found that, when the relative humidity of the hydrogen-containing gas falls below about 55% in a test using the electrolyte membrane 10 alone, its electric resistance increases.

It is therefore important to appropriately control the relative humidity of the hydrogen-containing gas to be supplied to the anode AN, from the viewpoint of preventing flooding in the anode AN and preventing drying up of the electrolyte membrane 10.

Accordingly, verification experiments were performed using an actual electrochemical hydrogen pump 100 to verify whether the relative humidity of the hydrogen-containing gas in the anode AN of the electrochemical hydrogen pump 100 could be maintained appropriately, and the experimental results were discussed.

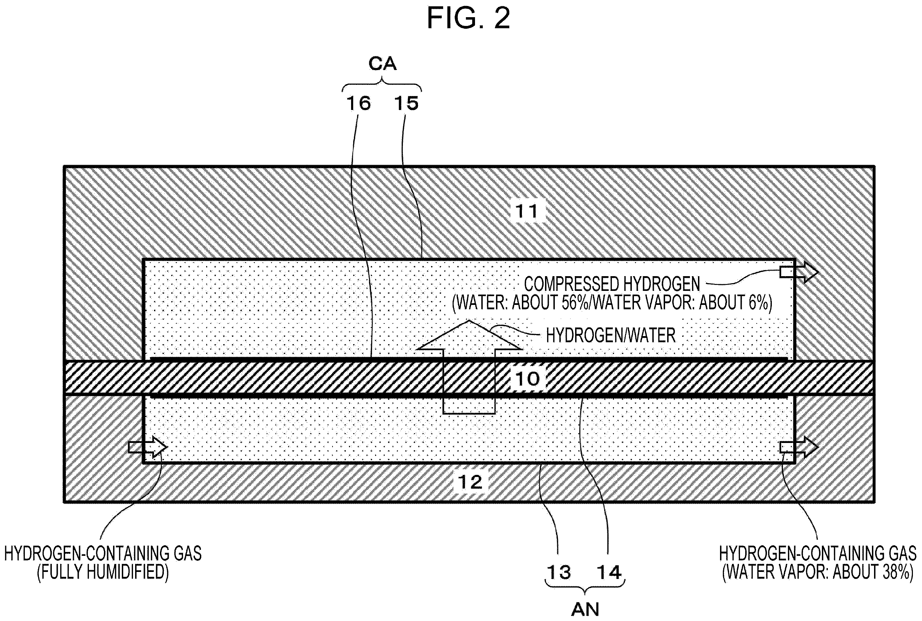

First, referring to Fig. 2, a description will be given of the flows of hydrogen and water (water vapor) when, for example, a hydrogen-containing gas with a relative humidity of 100% or close to 100% (in a fully humidified state) is supplied to the anode AN in the electrochemical cell and hydrogen in the hydrogen-containing gas flowing through a serpentine flow passage provided in an anode separator 12 is caused to move from the anode AN to the cathode CA through an electrochemical reaction at a hydrogen utilization rate of about 80%.

In Fig. 2, the illustrations of the manifold, the sealing members, the gas channels, etc. are omitted for the purpose of simplifying the drawing.

When the hydrogen-containing gas is supplied to the anode AN of the electrochemical hydrogen pump 100 and electric power is supplied from the voltage applicator to the electrochemical hydrogen pump 100, hydrogen molecules in an anode catalyst layer 14 of the electrochemical hydrogen pump 100 are separated into hydrogen ions (protons) and electrons through an oxidation reaction (formula (3)). The protons propagate through the electrolyte membrane 10 and move to a cathode catalyst layer 16. The electrons move through the voltage applicator to the cathode catalyst layer 16 of the cathode CA. Then the hydrogen molecules are re-generated in the cathode catalyst layer 16 through a reduction reaction (formula (4)).

Anode:

$$H^2 \text{ (low pressure)} \rightarrow 2H^+ + 2e^- \qquad (3)$$

Cathode:

$$2H^+ + 2e^- \rightarrow H^2 \text{ (high pressure)} \qquad (4)$$

As described above, in the electrochemical hydrogen pump 100, the voltage is applied between the anode AN and the cathode CA. This allows about 80% of hydrogen in the hydrogen-containing gas to move from the anode AN to the cathode CA, and the operation for compressing hydrogen (hydrogen compression operation) is thereby performed in a cathode feeder 15 of the cathode CA. Moreover, the remaining about 20% of the hydrogen in the hydrogen-containing gas that has passed through an anode feeder 13 and the serpentine flow passage is led as an off gas from the anode AN, then returned to the anode AN, and thereby recycled.

The hydrogen compressed in the cathode feeder 15 (compressed hydrogen) is discharged to the outside through a gas channel provided in a cathode separator 11 at an appropriate time. The dew point of the compressed hydrogen increases in proportion to its pressure. Therefore, as shown in Fig. 2, most of the moisture in the compressed hydrogen is in a liquid state.

[Experiments]

In the following experiments using an actual device, the dew point of the hydrogen-containing gas flowing through the channel for supplying the hydrogen-containing gas is adjusted by the first regulator 21 such that the amount of humidification becomes a prescribed value, as shown in Fig. 1. Moreover, the temperature of the hydrogen-containing gas to be supplied to the anode AN is adjusted to a prescribed value by the second regulator 22.

<Details and results of experiments>

Experimental verification using an actual device was performed as follows to examine the influence of the diffusion overpotential of the electrochemical cell when the temperature of the hydrogen-containing gas at the inlet of the anode was changed.

First, the dew point, flow rate, and temperature of the hydrogen-containing gas, the current density in the electrochemical cell, and the hydrogen compression operation of the compressor device 200 were set to the following values.

The current shown below (current density: 2.5 A/cm$^2$) is a value based on the assumption that the electrochemical hydrogen pump 100 is in rated operation, and the flow rate of the hydrogen-containing gas was determined according to this current density.

- Dew point of the hydrogen-containing gas: 48°C
- Flow rate of the hydrogen-containing gas (at the inlet of the anode): 6.54 NL/minute; 70 kPa (gauge pressure)
- Temperature of the hydrogen-containing gas (at the inlet of the anode): 51°C
- Current density: 2.5 A/cm$^2$
- Hydrogen compression operation: about 80% of hydrogen in the hydrogen-containing gas is compressed to 1.0 MPa (gauze pressure) in the cathode CA.

In this case, as the hydrogen-containing gas flows through the anode feeder 13 and the serpentine flow passage, hydrogen in the hydrogen-containing gas gradually moves to the cathode CA. In the end, about 20% of the hydrogen in the hydrogen-containing gas is led from the outlet of the anode AN as an off gas. Specifically, the amount of the hydrogen in the hydrogen-containing gas introduced into the anode AN gradually decreases from 100% to about 20% as the hydrogen-containing gas flows from the inlet of the anode to the outlet of the anode.

Meanwhile, the amount of water in the hydrogen-containing gas is determined by the balance between the amount of water migrating from the anode AN to the cathode CA through entrainment with hydrogen and the amount of hydrogen migrating from the cathode CA to the anode AN due to the difference in pressure between the anode AN and the cathode CA. As described above, the distribution of water in the electrochemical cell depends on the current flowing between the anode AN and the cathode CA, the pressure of the compressed hydrogen, etc.

The distribution of water in the electrochemical cell in the actual device was actually measured. As shown in Fig. 2, it was found that water in the hydrogen-containing gas was distributed such that about 62% of the water (water vapor and liquid water) in the hydrogen-containing gas was moved to the cathode CA and about 38% of the water (water vapor) in the hydrogen-containing gas was led from the outlet of the anode AN. The distribution ratio of the water in the hydrogen-containing gas at a minimum current allowing the operation of the electrochemical hydrogen pump 100 to be stabilized (current density: 1.0 A/cm$^2$) was the same as that in Fig. 2.

The diffusion overpotential of the electrochemical cell was actually measured under the above conditions, and an increase in the diffusion overpotential was found.

Next, the temperature of the hydrogen-containing gas at the inlet of the anode was reduced from 51°C to 49°C. The other conditions were the same as above. Then the increase in the diffusion overpotential of the electrochemical cell was found to be reduced.

Next, the temperature and dew point of the hydrogen-containing gas to be supplied to the anode AN were fixed at constant values, and then the hydrogen in the hydrogen-containing gas in the cathode CA was compressed to 40.0 MPa. In this state, the pressure of the hydrogen-containing gas at the inlet of the anode was increased to 100 kPa and then to 200 kPa. Then, also when the hydrogen in the cathode CA was compressed to 40.0 MPa, the diffusion overpotential of the electrochemical cell was found to increase as the pressure of the hydrogen-containing gas at the inlet of the anode increased.

The above verification experiments are merely examples, and these examples are not limitations.

<Discussion of experimental results>

When the temperature of the hydrogen-containing gas at the inlet of the anode was 51°C, the diffusion overpotential of the electrolyte membrane 10 increased as described above although the hydrogen-containing gas to be supplied to the anode AN satisfied the desired humidification conditions under which the diffusion overpotential of the electrolyte membrane 10 does not increase.

The present inventors thought that the increase in diffusion overpotential would be a phenomenon due to drying up of the electrolyte membrane 10. Then the inventors conducted extensive studies on the cause of the drying up of the electrolyte membrane 10 and inferred that the pressure of the hydrogen-containing gas to be supplied to the anode AN might cause a shift in the relative humidity of the hydrogen-containing gas at the inlet of the anode and be involved in the drying up of the electrolyte membrane 10.

Specifically, since the dew point of the hydrogen-containing gas at the inlet of the anode increases as the pressure of the hydrogen-containing gas to be supplied to the anode AN increases, the saturated water vapor pressure corresponding to the dew point of the hydrogen-containing gas after the increase in the pressure is higher than the saturated water vapor pressure of the hydrogen-containing gas that corresponds to the dew point of the hydrogen-containing gas before the increase in the pressure. The relative humidity of the hydrogen-containing gas in the anode AN at a certain temperature is represented by the ratio of the amount of water vapor to the amount of the saturated water vapor at this temperature. Therefore, as shown by formula (1) below, the relative humidity Rh (%) of the hydrogen-containing gas at the inlet of the anode with consideration given to the pressure P of the hydrogen-containing gas to be supplied to the anode ANP is lower than the relative humidity $Rh_0$ (%) of the hydrogen-containing gas with no consideration given to the pressure P.

$$Rh = Rh_0 \times (P_0/(P_0 + P)) \quad (1)$$

In formula (1), $P_0$ is the atmospheric pressure (0.1013 MPa). $Rh_0$ is represented by the following general formula (2) with the temperature T0 and dew point T of the hydrogen-containing gas used as variables.

$$Rh_0 = 10.0^{(C/(B/T + 1.0) - C/(B/T0 + 1.0))} \quad (2)$$

In formula (2), C and B are predetermined constants.

Therefore, the dew point, flow rate, and temperature of the hydrogen-containing gas, the current density in the electrochemical cell, and the hydrogen compression operation of the compressor device 200 were set so as to satisfy the following conditions, and the relative humidity of the hydrogen-containing gas with consideration given to the pressure P of the hydrogen-containing gas at the inlet of the anode (P = 70 kPa) and the relative humidity with no consideration given to the pressure P were estimated. The relative humidity $Rh_0$ in the latter case was 86%, but the relative humidity Rh in the former case was 51%.

- Dew point of the hydrogen-containing gas: 48°C
- Flow rate of the hydrogen-containing gas (at the inlet of the anode): 6.54 NL/minutes; 70 kPa (gauze pressure)
- Temperature of the hydrogen-containing gas (at the inlet of the anode): 51°C
- Current density: 2.5 A/cm$^2$
- Hydrogen compression operation: about 80% of hydrogen in the hydrogen-containing gas is compressed in the cathode CA to 1.0 MPa (gauze pressure).

Next, among the above conditions set, only the temperature of the hydrogen-containing gas at the inlet of the anode was changed from 51°C to 49°C, and the relative humidity Rh of the hydrogen-containing gas with consideration given to the pressure P of the hydrogen-containing gas at the inlet of the anode (P = 70 kPa) was re-estimated. The relative humidity Rh was found to be 56%.

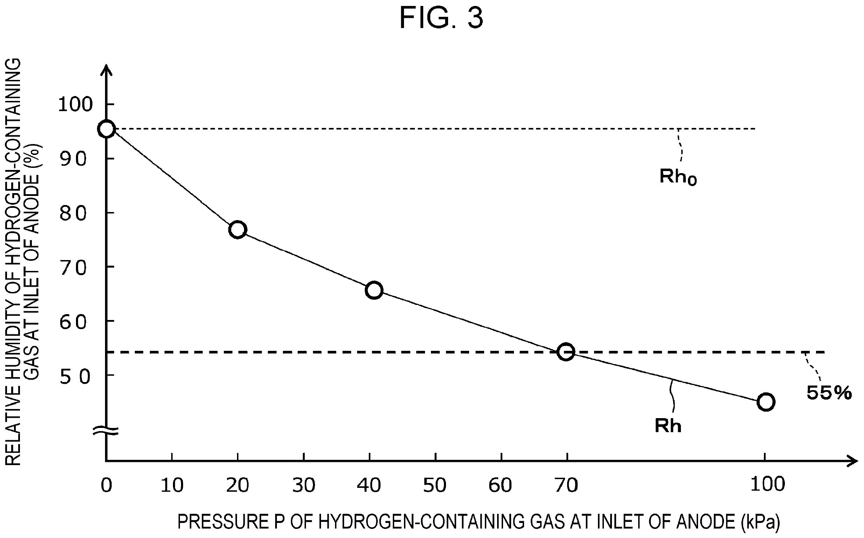

Fig. 3 is a graph showing an example of measurement data about the relative humidity of the hydrogen-containing gas with consideration given to the pressure of the hydrogen-containing gas at the inlet of the anode and the relative humidity with no consideration given to the pressure. The horizontal axis of Fig. 3 represents the pressure P (gauze pressure) of the hydrogen-containing gas at the inlet of the anode, and the vertical axis represents the relative humidity of the hydrogen-containing gas at the inlet of the anode. Fig. 3 shows data (a solid line) about the relative humidity Rh of the hydrogen-containing gas obtained from actual measurement of the amount of water in the hydrogen-containing gas discharged from the outlet of the anode when only the pressure P of the hydrogen-containing gas at the inlet of the anode was changed while the gas volume, the temperature of the hydrogen-containing gas to be supplied to the anode AN (50°C), and its dew point (49°C) were held constant. Fig. 3 also shows data (a thin dotted line) about the relative humidity $Rh_0$ of the hydrogen-containing gas with no consideration given to the pressure P of the hydrogen-containing gas at the inlet of the anode.

As can be seen from Fig. 3, as the pressure P increases and therefore the saturated water vapor pressure increases, the relative humidity Rh of the hydrogen-containing gas with consideration given to the pressure P of the hydrogen-containing gas at the inlet of the anode decreases. It was therefore found that, when the pressure P of the hydrogen-containing gas at the inlet of the anode was around about 70 kPa, the relative humidity Rh became lower than 55%.

The results of the above verification experiments are data that supports the inference that the pressure of the hydrogen-containing gas to be supplied to the anode AN causes a shift in the relative humidity of the hydrogen-containing gas at the inlet of the anode and is thereby involved in drying up of the electrolyte membrane 10. Specifically, in consideration of the test using the electrolyte membrane 10 alone whose electric resistance increases when the relative humidity of the hydrogen-containing gas becomes lower than about 55%, the change in the diffusion overpotential of the electrochemical cell in the actual device, the results of the computation of the relative humidity Rh of the hydrogen-containing gas based on formulas (1) and (2) above, and the change in the relative humidity Rh of the hydrogen-containing gas in the actual device (Fig. 3) can be understood without contradiction.

(Control Examples 1)

<Control Example 1A>

In the compressor device 200 in the present Control Example, as the pressure of the hydrogen-containing gas to be supplied to the anode AN increases, the controller 50 controls the second regulator 22 to reduce the temperature of the hydrogen-containing gas to be supplied to the anode AN. In the case where the second regulator 22 is, for example, a temperature controller utilizing a heat medium, when the pressure of the hydrogen-containing gas to be supplied to the anode AN increases, the controller 50 may control the temperature controller to reduce the temperature of the heat medium that exchanges heat with the hydrogen-containing gas.

In contrast, when the pressure of the hydrogen-containing gas to be supplied to the anode AN decreases, the controller 50 controls the second regulator 22 to increase the temperature of the hydrogen-containing gas to be supplied to the anode AN.

In the case where the second regulator 22 is, for example, a temperature controller utilizing a heat medium, when the pressure of the hydrogen-containing gas to be supplied to the anode AN decreases, the controller 50 may control the temperature controller to increase the temperature of the heat medium that exchanges heat with the hydrogen-containing gas.

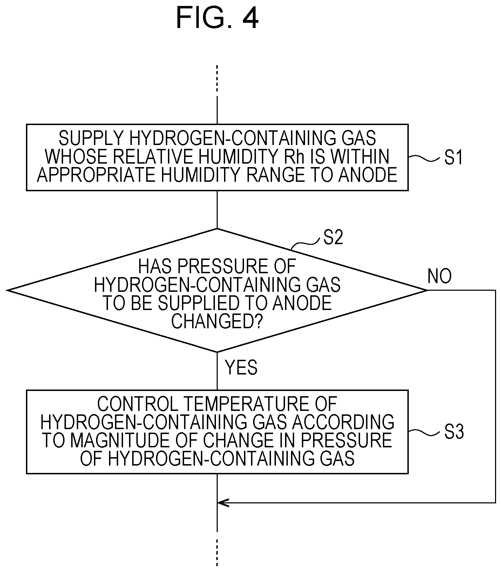

Fig. 4 is a flowchart in Control Example 1A of the compressor device in the Example of the embodiment.

For example, the arithmetic circuit of the controller 50 may read a control program from the storage circuit of the controller 50 to perform the following operation. However, it is not always necessary to perform the following operation using the controller 50. The operator may perform part of the operation. In the description of the following example, the controller 50 is used to control the operation.

First, while the hydrogen-containing gas whose relative humidity Rh is within an appropriate humidity range is supplied to the anode AN (step S1), a determination is made in step S2 as to whether or not the pressure of the hydrogen-containing gas has changed.

In step S2, if a determination is made that the pressure of the hydrogen-containing gas has not changed, the operations in step S1 and the subsequent step are re-executed at an appropriate time.

In step S2, if a determination is made that the pressure of the hydrogen-containing gas has changed, the temperature of the hydrogen-containing gas is controlled in step S3 according to the magnitude of the change in the pressure of the hydrogen-containing gas.

In the above flow, if, for example, the pressure of the hydrogen-containing gas has increased in step S2, the control in step S3 is performed in which the temperature of the hydrogen-containing gas is reduced according to the value of the increase in the pressure of the hydrogen-containing gas. When, for example, the increase in the pressure of the hydrogen-containing gas is about 20 kPa, the temperature of the hydrogen-containing gas may be reduced by about 2°C.

In contrast, if the pressure of the hydrogen-containing gas has decreased in step S2, the control in step S3 is performed in which the temperature of the hydrogen-containing gas is increased according to the value of the reduction in the pressure of the hydrogen-containing gas. For example, when the reduction in the pressure of the hydrogen-containing gas is about 20 kPa, the temperature of the hydrogen-containing gas may be increased by about 2°C.

In the case where the humidity state of the hydrogen-containing gas to be supplied to the anode AN is controlled with no consideration given to the change in the pressure of the hydrogen-containing gas to be supplied to the anode AN, when the pressure of the hydrogen-containing gas to be supplied to the anode AN increases, the relative humidity of the hydrogen-containing gas at the inlet of the anode decreases. In this case, drying up of the electrolyte membrane 10 may occur.

However, with the compressor device 200 in the present Control Example and the method for controlling the compressor device 200, when the pressure of the hydrogen-containing gas to be supplied to the anode AN increases, the temperature of the hydrogen-containing gas to be supplied to the anode AN is reduced, so that the possibility of the occurrence of drying up of the electrolyte membrane 10 can be reduced.

In the case where the humidity state of the hydrogen-containing gas to be supplied to the anode AN is controlled with no consideration given to the change in the pressure of the hydrogen-containing gas to be supplied to the anode AN, when the pressure of the hydrogen-containing gas to be supplied to the anode AN decreases, the relative humidity of the hydrogen-containing gas at the inlet of the anode increases. In this case, for example, the relative humidity of the hydrogen-containing gas is higher at the outlet of the anode than at the inlet of the anode. Therefore, the higher the relative humidity of the hydrogen-containing gas at the inlet of the anode, the more likely flooding is to occur at the outlet of the anode.

However, with the compressor device 200 in the present Control Example and the method for controlling the compressor device 200, when the pressure of the hydrogen-containing gas to be supplied to the anode AN decreases, the temperature of the hydrogen-containing gas to be supplied to the anode AN is increased, so that the possibility of the occurrence of flooding at the outlet of the anode can be reduced.

<Control Example 1B>

In the compressor device 200 in the present Control Example, when the pressure of the hydrogen-containing gas to be supplied to the anode AN increases, the controller 50 controls the first regulator 21 to increase the dew point of the hydrogen-containing gas to be supplied to the anode AN. In the case where the first regulator 21 is, for example, a humidifier having a bubbler structure, when the pressure of the hydrogen-containing gas to be supplied to the anode AN increases, the controller 50 may control the humidifier to increase the temperature of warm water in a bubbling tank.

In contrast, when the pressure of the hydrogen-containing gas to be supplied to the anode AN decreases, the controller 50 controls the first regulator 21 to reduce the dew point of the hydrogen-containing gas to be supplied to the anode AN. In the case where the first regulator 21 is, for example, a humidifier having a bubbler structure, when the pressure of the hydrogen-containing gas to be supplied to the anode AN decreases, the controller 50 may control the humidifier to reduce the temperature of warm water in a bubbling tank.

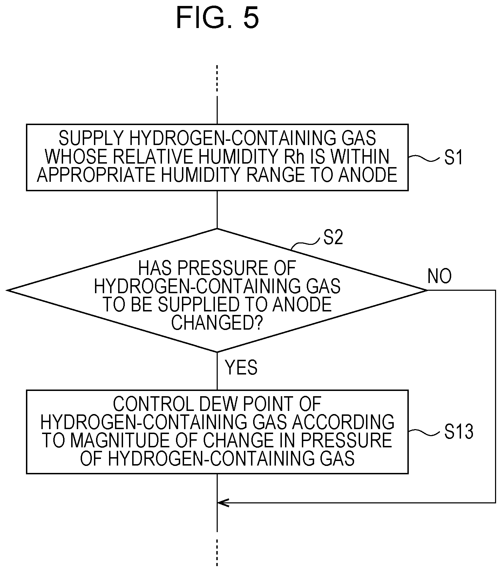

Fig. 5 is a flowchart in Control Example 1B of the compressor device in the Example of the embodiment.

For example, the arithmetic circuit of the controller 50 may read a control program from the storage circuit of the controller 50 to perform the following operation. However, it is not always necessary to perform the following operation using the controller 50. The operator may perform part of the operation. In the description of the following example, the controller 50 is used to control the operation.

First, while the hydrogen-containing gas whose relative humidity Rh is within an appropriate humidity range is supplied to the anode AN (step S1), a determination is made in step S2 as to whether or not the pressure of the hydrogen-containing gas has changed.

In step S2, if a determination is made that the pressure of the hydrogen-containing gas has not changed, the operations in step S1 and the subsequent step are re-executed at an appropriate time.

In step S2, if a determination is made that the pressure of the hydrogen-containing gas has changed, the dew point of the hydrogen-containing gas is controlled in step S13 according to the magnitude of the change in the pressure of the hydrogen-containing gas.

In the above flow, if, for example, the pressure of the hydrogen-containing gas has increased in step S2, the control in step S13 is performed in which the dew point of the hydrogen-containing gas is increased according to the value of the increase in the pressure of the hydrogen-containing gas. When, for example, the increase in the pressure of the hydrogen-containing gas is about 20 kPa, the dew point of the hydrogen-containing gas may be increased by about 2°C.

In contrast, if the pressure of the hydrogen-containing gas has decreased in step S2, the control in step S13 is performed in which the dew point of the hydrogen-containing gas is reduced according to the value of the reduction in the pressure of the hydrogen-containing gas. For example, when the reduction in the pressure of the hydrogen-containing gas is about 20 kPa, the dew point of the hydrogen-containing gas may be reduced by about 2°C.

In the case where the humidity state of the hydrogen-containing gas to be supplied to the anode AN is controlled with no consideration given to the change in the pressure of the hydrogen-containing gas to be supplied to the anode AN, when the pressure of the hydrogen-containing gas to be supplied to the anode AN increases, the relative humidity of the hydrogen-containing gas at the inlet of the anode decreases. In this case, drying up of the electrolyte membrane 10 may occur.

However, with the compressor device 200 in the present Control Example and the method for controlling the compressor device 200, when the pressure of the hydrogen-containing gas to be supplied to the anode AN increases, the dew point of the hydrogen-containing gas to be supplied to the anode AN is increased, so that the possibility of the occurrence of drying up of the electrolyte membrane 10 can be reduced.

In the case where the humidity state of the hydrogen-containing gas to be supplied to the anode AN is controlled with no consideration given to the change in the pressure of the hydrogen-containing gas to be supplied to the anode AN, when the pressure of the hydrogen-containing gas to be supplied to the anode AN decreases, the relative humidity of the hydrogen-containing gas at the inlet of the anode increases. In this case, for example, the relative humidity of the hydrogen-containing gas is higher at the outlet of the anode than at the inlet of the anode. Therefore, the higher the relative humidity of the hydrogen-containing gas at the inlet of the anode, the more likely flooding is to occur at the outlet of the anode.

However, with the compressor device 200 in the present Control Example and the method for controlling the compressor device 200, when the pressure of the hydrogen-containing gas to be supplied to the anode AN decreases, the dew point of the hydrogen-containing gas to be supplied to the anode AN is reduced, so that the possibility of the occurrence of flooding at the outlet of the anode can be reduced.

(Control Example 2)

Table 1 below includes tables for performing Control Example 2 of the compressor device 200 in the Example of the embodiment. Table 1 has been stored in advance in the storage circuit of the controller 50.

For example, the arithmetic circuit of the controller 50 may read Table 1 from the storage circuit of the controller 50 to perform the following operation. However, it is not always necessary to perform the following operation using the controller 50. The operator may perform part of the operation. In the description of the following example, the controller 50 is used to control the operation.

[Table 1]

| (a) Temperature T0 of hydrogen-containing gas at inlet of anode (T0 = 48.0°C) | | | | | |
|---|---|---|---|---|---|
| Pressure P of hydrogen-containing gas at inlet of anode (MPa) | 0.01 | 0.03 | 0.05 | 0.07 | 0.09 |
| Dew point T of hydrogen-containing gas at inlet of anode (°C) | 37.3≤T≤40.0 | 40.4≤T≤43.1 | 43.1≤T≤45.8 | 45.5≤T≤48.0 | 47.6≤T≤48.0 |
| (b) Temperature T0 of hydrogen-containing gas at inlet of anode (T0 = 51.0°C) | | | | | |
| Pressure P of hydrogen-containing gas at inlet of anode (MPa) | 0.01 | 0.03 | 0.05 | 0.07 | 0.09 |
| Dew point T of hydrogen-containing gas at inlet of anode (°C) | 40.1≤T≤42.8 | 43.2≤T≤46.0 | 46≤T≤48.8 | 48.4≤T≤51.0 | 50.6≤T≤51.0 |
| (c) Temperature T0 of hydrogen-containing gas at inlet of anode (T0 = 54.0°C) | | | | | |
| Pressure P of hydrogen-containing gas at inlet of anode (MPa) | 0.01 | 0.03 | 0.05 | 0.07 | 0.09 |
| Dew point T of hydrogen-containing gas at inlet of anode (°C) | 42.9≤T≤45.6 | 46.1≤T≤48.9 | 48.9≤T≤51.8 | 51.4≤T≤54.0 | 53.6≤T≤54.0 |

Table 1(a) shows prescribed ranges of the dew point T of the hydrogen-containing gas that correspond to appropriate humidity ranges (upper limit U = 60%, lower limit D = 52%) of the relative humidity Rh of the hydrogen-containing gas at the inlet of the anode (these ranges are hereinafter referred to as appropriate temperature ranges) when the temperature T0 of the hydrogen-containing gas at the inlet of the anode is 48.0°C and the pressure P of the hydrogen-containing gas at the inlet of the anode is 0.01 (MPa), 0.03 (MPa), 0.05 (MPa), 0.07 (MPa), or 0.09 (MPa).

Table 1(b) shows appropriate temperature ranges of the dew point T of the hydrogen-containing gas that correspond to appropriate humidity ranges (upper limit U = 60%, lower limit D = 52%) of the relative humidity Rh of the hydrogen-containing gas at the inlet of the anode when the temperature T0 of the hydrogen-containing gas at the inlet of the anode is 51.0°C and the pressure P of the hydrogen-containing gas at the inlet of the anode is 0.01 (MPa), 0.03 (MPa), 0.05 (MPa), 0.07 (MPa), or 0.09 (MPa).

Table 1(c) shows appropriate temperature ranges of the dew point T of the hydrogen-containing gas that correspond to appropriate humidity ranges (upper limit U = 60%, lower limit D = 52%) of the relative humidity Rh of the hydrogen-containing gas at the inlet of the anode when the temperature T0 of the hydrogen-containing gas at the inlet of the anode is 54.0°C and the pressure P of the hydrogen-containing gas at the inlet of the anode is 0.01 (MPa), 0.03 (MPa), 0.05 (MPa), 0.07 (MPa), or 0.09 (MPa).

As shown in Table 1, when the temperature T0 of the hydrogen-containing gas at the inlet of the anode is any of 48.0°C, 51.0°C, and 54.0°C, as the pressure P of the hydrogen-containing gas at the inlet of the anode increases, the appropriate temperature range of the dew point T of the hydrogen-containing gas at the inlet of the anode is shifted such that the upper and lower limits of the appropriate temperature range increase. For example, in the case where the temperature T0 of the hydrogen-containing gas at the inlet of the anode is 48.0°C, when the pressure P of the hydrogen-containing gas at the inlet of the anode is 0.01 (MPa), the appropriate temperature range of the dew point T of the hydrogen-containing gas at the inlet of the anode is low, i.e., 37.3°C to 40.0°C. However, when the pressure P of the hydrogen-containing gas at the inlet of the anode increases to 0.09 (MPa), the appropriate temperature range of the dew point T of the hydrogen-containing gas at the inlet of the anode becomes high, i.e., 47.6°C to 48.0°C.

Therefore, in the compressor device 200 in the present Control Example and the method for controlling the compressor device 200, the dew point T of the hydrogen-containing gas is controlled according to the pressure P of the hydrogen-containing gas at the inlet of the anode based on Table 1. For example, the dew point T of the hydrogen-containing gas may be increased according to the increase in the pressure P of the hydrogen-containing gas at the inlet of the anode so as to fall within an appropriate temperature range in Table 1.

Alternatively, the temperature T0 of the hydrogen-containing gas at the inlet of the anode may be controlled according to the pressure P of the hydrogen-containing gas at the inlet of the anode based on Table 1. For example, the temperature T0 of the hydrogen-containing gas at the inlet of the anode may be reduced according to the increase in the pressure P of the hydrogen-containing gas at the inlet of the anode. When, for example, the dew point T of the hydrogen-containing gas at the inlet of the anode is about 44°C, if the pressure P of the hydrogen-containing gas at the inlet of the anode increases to 0.01 (MPa), 0.03 (MPa), or 0.05 (MPa), the temperature T0 of the hydrogen-containing gas at the inlet of the anode is reduced to 54.0°C, 51.0°C, or 48.0°C.

The above-described details of the control by the controller 50 are merely an example, and the present disclosure is not limited to this example. For example, the temperature T0 of the hydrogen-containing gas at the inlet of the anode may fall within a temperature range lower than a temperature (48.0°C) in Table 1 or may fall within a temperature range higher than a temperature (54.0°C) in Table 1. The temperature T0 of the hydrogen-containing gas at the inlet of the anode may be changed in temperature steps larger or smaller than those in Table 1 (3°C).

The operational advantages of the compressor device 200 in the present Control Example and the method for controlling the compressor device 200 can be easily understood in consideration of the operational advantages described in Control Examples 1A and 1B, and therefore the description thereof will be omitted.

The compressor device 200 in the present Control Example and the method for controlling the compressor device 200 may be the same as those in the embodiment except for the above features.

(Control Example 3)

<Control Example 3A>

The details of the compressor device 200 in the present Control Example and a method for controlling the compressor device 200 are the same as those described in Control Example 1A except for the details of the control by the controller 50 described below.

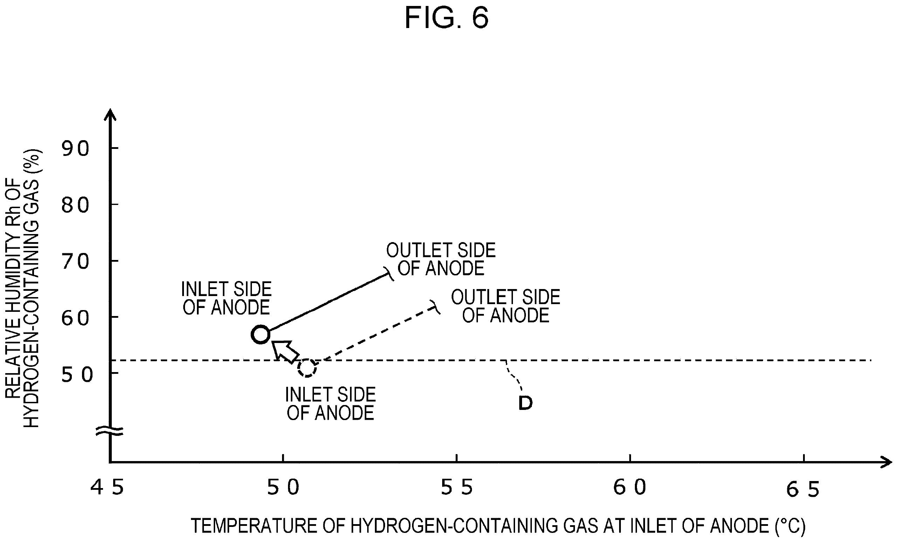

Fig. 6 shows an example in which the dew point and flow rate of the hydrogen-containing gas, the current density in the electrochemical cell, and the hydrogen compression operation of the compressor device 200 are set to values described below and in which the temperature of the hydrogen-containing gas at the inlet of the anode is changed from 51°C to 49°C to control the relative humidity Rh of the hydrogen-containing gas at the inlet of the anode such that the relative humidity Rh outside the appropriate humidity range is shifted so as to be higher than the lower limit D of the appropriate humidity range as shown by an arrow. Although not illustrated, the relative humidity Rh of the hydrogen-containing gas that is shown by a solid line in Fig. 6 was about 70% at the outlet of the anode because the pressure of the hydrogen-containing gas at the outlet of the anode was lower than the pressure of the hydrogen-containing gas at the inlet of the anode. This relative humidity (about 70%) is a condition under which drying up of the electrolyte membrane 10 and also flooding in the anode AN do not occur.

- Dew point of the hydrogen-containing gas: 48°C
- Flow rate of the hydrogen-containing gas (at the inlet of the anode): 6.54 NL/minute; 70 kPa (gauze pressure)
- Temperature of the hydrogen-containing gas (at the inlet of the anode): 51°C → 49°C
- Current density: 2.5 A/cm$^2$
- Hydrogen compression operation: about 80% of hydrogen in the hydrogen-containing gas is compressed to 1.0 MPa (gauze pressure) in the cathode CA.

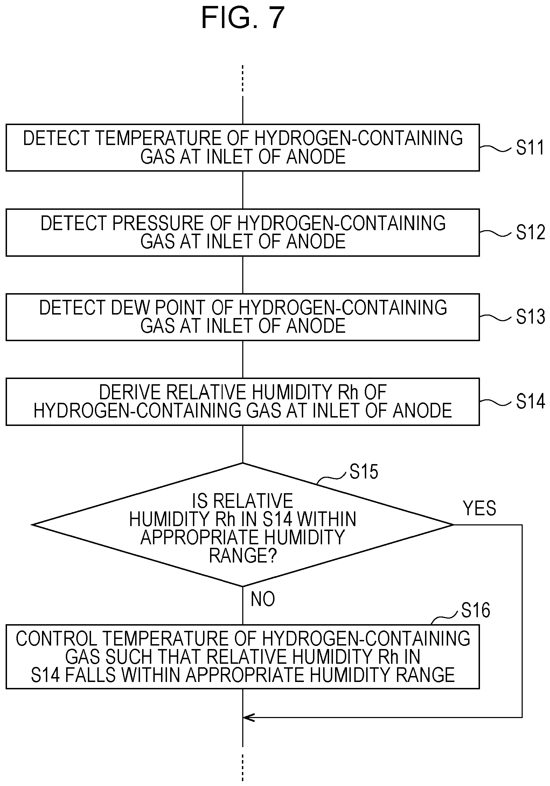

Fig. 7 is a flowchart in Control Example 3A of the compressor device in the Example of the embodiment.

For example, the arithmetic circuit of the controller 50 may read a control program from the storage circuit of the controller 50 to perform the following operation. However, it is not always necessary to perform the following operation using the controller 50. The operator may perform part of the operation. In the description of the following example, the controller 50 is used to control the operation.

In step S11, the temperature of the hydrogen-containing gas at the inlet of the anode is detected at an appropriate time during the hydrogen compression operation. The temperature of the hydrogen-containing gas can be detected using an appropriate thermometer.

Next, in step S12, the pressure of the hydrogen-containing gas at the inlet of the anode is detected. The pressure of the hydrogen-containing gas can be detected using an appropriate manometer or flowmeter.

Next, in step S13, the dew point of the hydrogen-containing gas at the inlet of the anode is detected. The dew point of the hydrogen-containing gas can be detected using an appropriate dew-point hygrometer.

Next, in step S14, the relative humidity Rh of the hydrogen-containing gas at the inlet of the anode is derived. When the temperature of the hydrogen-containing gas in step S11, the pressure of the hydrogen-containing gas in step S12, and the dew point of the hydrogen-containing gas in step S13 are known, the relative humidity Rh can be computed using formulas (1) and (2) above.

Next, in step S15, a determination is made as to whether the relative humidity Rh of the hydrogen-containing gas at the inlet of the anode falls within the appropriate humidity range. The appropriate humidity range of the relative humidity Rh is set as follows. For example, the upper limit U of the appropriate humidity range may be set to about 60%, and the lower limit D of the appropriate humidity range may be set to about 52%. These upper and lower limits U and D are merely examples, and these examples do not limit the disclosure.

In step S15, if the relative humidity Rh of the hydrogen-containing gas at the inlet of the anode is within the appropriate humidity range, the operations in step S11 and the subsequent steps are re-executed at an appropriate time.

In step S15, if the relative humidity Rh of the hydrogen-containing gas at the inlet of the anode is not within the appropriate humidity range, the temperature of the hydrogen-containing gas to be supplied to the anode AN is controlled in step S16 such that the relative humidity Rh of the hydrogen-containing gas at the inlet of the anode falls within the appropriate humidity range. The temperature of the hydrogen-containing gas to be supplied to the anode AN is controlled by the second regulator 22 described above. Then the operations in step S11 and the subsequent steps are re-executed at an appropriate time.

In the above flow, if, for example, the pressure of the hydrogen-containing gas to be supplied to the anode AN has increased and therefore the relative humidity Rh is outside the appropriate humidity range in step S15, the control in S16 is performed in which the temperature of the hydrogen-containing gas to be supplied to the anode AN is reduced. In contrast, if the pressure of the hydrogen-containing gas to be supplied to the anode AN has decreased and therefore the relative humidity Rh is outside the appropriate humidity range in step S15, the control in step S16 is performed in which the temperature of the hydrogen-containing gas to be supplied to the anode AN is increased.

The above-described details of the control by the controller 50 are merely an example, and the present disclosure is not limited to this example. When the pressure of the hydrogen-containing gas to be supplied to the anode AN fluctuates, the controller 50 may control an appropriate control target such that the pressure of the hydrogen-containing gas at the inlet of the anode is maintained constant. For example, the controller 50 may control an unillustrated pump to regulate the flow rate of the hydrogen-containing gas such that the pressure of the hydrogen-containing gas is maintained constant.

The operational advantages of the compressor device 200 in the present Control Example and the method for controlling the compressor device 200 can be easily understood in consideration of the operational advantages described in Control Example 1A, and therefore the description thereof will be omitted.

The compressor device 200 in the present Control Example and the method for controlling the compressor device 200 may be the same as those in the embodiment except for the above features.

<Control Example 3B>

The details of the compressor device 200 in the present Control Example and a method for controlling the compressor device 200 are the same as those described in Control Example 1B except for the details of the control by the controller 50 described below.

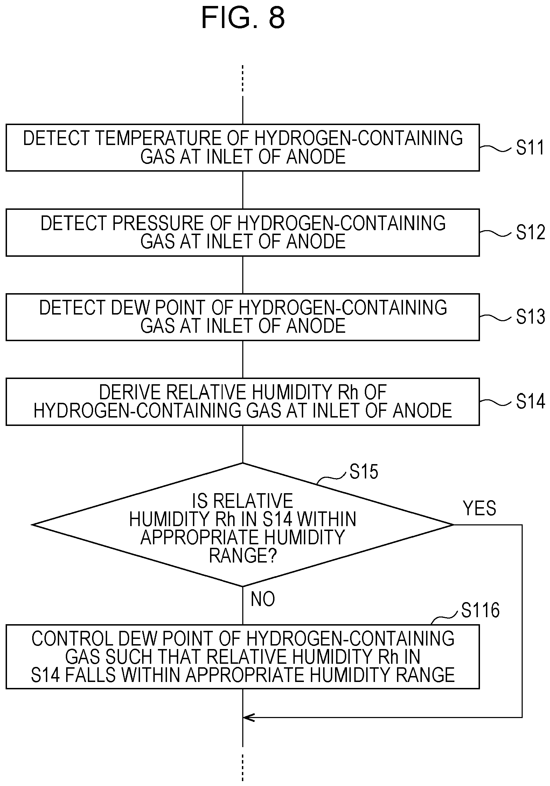

Fig. 8 is a flowchart in Control Example 3B of the compressor device in the Example of the embodiment.

For example, the arithmetic circuit of the controller 50 may read a control program from the storage circuit of the controller 50 to perform the following operation. However, it is not always necessary to perform the following operation using the controller 50. The operator may perform part of the operation. In the description of the following example, the controller 50 is used to control the operation.

Steps S 1 1 to S15 in Fig. 8 are the same as steps S11 to S15 in Fig. 7, and the description thereof will be omitted.

In step S15, if the relative humidity Rh of the hydrogen-containing gas at the inlet of the anode is not within the appropriate humidity range, the dew point of the hydrogen-containing gas to be supplied to the anode AN is controlled in step S 116 such that the relative humidity Rh of the hydrogen-containing gas at the inlet of the anode falls within the appropriate humidity range. The dew point of the hydrogen-containing gas to be supplied to the anode AN is controlled by the first regulator 21 described above. Then the operations in step S11 and the subsequent steps are re-executed at an appropriate time.

In the above flow, if, for example, the pressure of the hydrogen-containing gas to be supplied to the anode AN has increased and therefore the relative humidity Rh is outside the appropriate humidity range in step S15, the control in step S 116 is performed in which the dew point of the hydrogen-containing gas to be supplied to the anode AN is increased. In contrast, if the pressure of the hydrogen-containing gas to be supplied to the anode AN has decreased and therefore the relative humidity Rh is outside the appropriate humidity range in step S15, the control in step S 116 is performed in which the dew point of the hydrogen-containing gas to be supplied to the anode AN is reduced.

The details of the control by the controller 50 are merely an example, and the present disclosure is not limited to this example. When the pressure of the hydrogen-containing gas to be supplied to the anode AN fluctuates, the controller 50 may control an appropriate control target such that the pressure of the hydrogen-containing gas at the inlet of the anode is maintained constant. For example, the controller 50 may control an unillustrated pump to regulate the flow rate of the hydrogen-containing gas such that the pressure of the hydrogen-containing gas is maintained constant.

The operational advantages of the compressor device 200 in the present Control Example and the method for controlling the compressor device 200 can be easily understood in consideration of the operational advantages described in Control Example 1B, and the description thereof will be omitted.

The compressor device 200 in the present Control Example and the method for controlling the compressor device 200 may be the same as the compressor device 200 in the embodiment and the method for controlling the compressor device 200 in the embodiment except for the above features.

The above embodiment and the Example of the embodiment may be combined with each other so long as they do not exclude each other.

From the foregoing description, many modifications and other embodiments of the present disclosure will be apparent to those skilled in the art. Therefore, the foregoing description is to be construed as illustrative only and is provided for the purpose of teaching those skilled in the art the best mode of carrying out the present disclosure. The details of the structure and/or function of the present disclosure may be changed substantially without departing from the spirit of the present disclosure.

Industrial Applicability

The aspects of the present disclosure can be used as a compressor device in which the relative humidity of the hydrogen-containing gas to be supplied to the anode can be controlled more appropriately than in conventional techniques and as a method for controlling the compressor device.

Reference Signs List

    10: electrolyte membrane
    11: cathode separator
    12: anode separator
    13: anode feeder
    14: anode catalyst layer
    15: cathode feeder
    16: cathode catalyst layer
    21: first regulator
    22: second regulator
    50: controller
    100: electrochemical hydrogen pump
    200: compressor device
    AN: anode
    CA: cathode
    T: dew point of hydrogen-containing gas
    T0: temperature of hydrogen-containing gas

**Claims**

1. A compressor device comprising:

   a compressor that causes, by applying a voltage between an anode and a cathode, hydrogen in a hydrogen-containing gas supplied to the anode to move through an electrolyte membrane to the cathode and compresses the hydrogen;
   a first regulator that regulates the dew point of the hydrogen-containing gas to be supplied to the anode;
   a second regulator that regulates the temperature of the hydrogen-containing gas to be supplied to the anode; and
   a controller that controls at least one of the first regulator or the second regulator based on the pressure of the hydrogen-containing gas to be supplied to the anode.

2. The compressor device according to claim 1, wherein, when the pressure of the hydrogen-containing gas to be supplied to the anode increases, the controller controls the first regulator to increase the dew point of the hydrogen-containing gas to be supplied to the anode.

3. The compressor device according to claim 1 or 2, wherein, when the pressure of the hydrogen-containing gas to be supplied to the anode increases, the controller controls the second regulator to reduce the temperature of the hydrogen-containing gas to be supplied to the anode.

4. The compressor device according to any one of claims 1 to 3, wherein, when the pressure of the hydrogen-containing gas to be supplied to the anode decreases, the controller controls the first regulator to reduce the dew point of the hydrogen-containing gas to be supplied to the anode.

5. The compressor device according to any one of claims 1 to 4, wherein, when the pressure of the hydrogen-containing gas to be supplied to the anode decreases, the controller controls the second regulator to increase the temperature of the hydrogen-containing gas to be supplied to the anode.

6. A method for controlling a compressor device, the method comprising the step of causing by applying a voltage between an anode and a cathode, hydrogen in a hydrogen-containing gas supplied to the anode to move through an electrolyte membrane to the cathode and compressing the hydrogen,
   wherein, in the step of applying, at least one of the dew point of the hydrogen-containing gas to be supplied to the anode or the temperature thereof is controlled based on the pressure of the hydrogen-containing gas to be supplied to the anode.

7. The method according to claim 6, wherein, when the pressure of the hydrogen-containing gas to be supplied to the anode increases, the dew point of the hydrogen-containing gas to be supplied to the anode is increased.

8. The method according to claim 6 or 7, wherein, when the pressure of the hydrogen-containing gas to be supplied to the anode increases, the temperature of the hydrogen-containing gas to be supplied to the anode is reduced.

9. The method according to any one of claims 6 to 8, wherein, when the pressure of the hydrogen-containing gas to be supplied to the anode decreases, the dew point of the hydrogen-containing gas to be supplied to the anode is reduced.

10. The method according to any one of claims 6 to 9, wherein, when the pressure of the hydrogen-containing gas to be supplied to the anode decreases, the temperature of the hydrogen-containing gas to be supplied to the anode is increased.

# FIG. 1

HYDROGEN-CONTAINING GAS

# FIG. 2

CA  
16  15

11

COMPRESSED HYDROGEN  
(WATER: ABOUT 56%/WATER VAPOR: ABOUT 6%)

HYDROGEN/WATER

10

12

HYDROGEN-CONTAINING GAS  
(FULLY HUMIDIFIED)

HYDROGEN-CONTAINING GAS  
(WATER VAPOR: ABOUT 38%)

13  14  
AN

EP 4 328 356 A1

FIG. 3

# FIG. 4

SUPPLY HYDROGEN-CONTAINING GAS WHOSE RELATIVE HUMIDITY Rh IS WITHIN APPROPRIATE HUMIDITY RANGE TO ANODE — S1

HAS PRESSURE OF HYDROGEN-CONTAINING GAS TO BE SUPPLIED TO ANODE CHANGED? S2

NO

YES

CONTROL TEMPERATURE OF HYDROGEN-CONTAINING GAS ACCORDING TO MAGNITUDE OF CHANGE IN PRESSURE OF HYDROGEN-CONTAINING GAS — S3

# FIG. 5

SUPPLY HYDROGEN-CONTAINING GAS
WHOSE RELATIVE HUMIDITY Rh IS WITHIN
APPROPRIATE HUMIDITY RANGE TO ANODE — S1

HAS PRESSURE OF
HYDROGEN-CONTAINING GAS
TO BE SUPPLIED TO ANODE
CHANGED? — S2

NO

YES

CONTROL DEW POINT OF
HYDROGEN-CONTAINING GAS ACCORDING
TO MAGNITUDE OF CHANGE IN PRESSURE
OF HYDROGEN-CONTAINING GAS — S13

# FIG. 6

# FIG. 7

```
              ┆
              ┆
              │
┌─────────────────────────────────────┐
│ DETECT TEMPERATURE OF HYDROGEN-CONTAINING │ ~ S11
│         GAS AT INLET OF ANODE         │
└─────────────────────────────────────┘
              │
┌─────────────────────────────────────┐
│ DETECT PRESSURE OF HYDROGEN-CONTAINING │ ~ S12
│         GAS AT INLET OF ANODE         │
└─────────────────────────────────────┘
              │
┌─────────────────────────────────────┐
│ DETECT DEW POINT OF HYDROGEN-CONTAINING │ ~ S13
│         GAS AT INLET OF ANODE         │
└─────────────────────────────────────┘
              │
┌─────────────────────────────────────┐
│       DERIVE RELATIVE HUMIDITY Rh OF      │ ~ S14
│ HYDROGEN-CONTAINING GAS AT INLET OF ANODE │
└─────────────────────────────────────┘
              │
```

S15

IS RELATIVE
HUMIDITY Rh IN S14 WITHIN
APPROPRIATE HUMIDITY
RANGE?                           YES

NO

S16

CONTROL TEMPERATURE OF HYDROGEN-CONTAINING
GAS SUCH THAT RELATIVE HUMIDITY Rh IN
S14 FALLS WITHIN APPROPRIATE HUMIDITY RANGE

# FIG. 8

DETECT TEMPERATURE OF HYDROGEN-CONTAINING GAS AT INLET OF ANODE — S11

DETECT PRESSURE OF HYDROGEN-CONTAINING GAS AT INLET OF ANODE — S12

DETECT DEW POINT OF HYDROGEN-CONTAINING GAS AT INLET OF ANODE — S13

DERIVE RELATIVE HUMIDITY Rh OF HYDROGEN-CONTAINING GAS AT INLET OF ANODE — S14

S15

IS RELATIVE HUMIDITY Rh IN S14 WITHIN APPROPRIATE HUMIDITY RANGE?

YES

NO

S116

CONTROL DEW POINT OF HYDROGEN-CONTAINING GAS SUCH THAT RELATIVE HUMIDITY Rh IN S14 FALLS WITHIN APPROPRIATE HUMIDITY RANGE

## INTERNATIONAL SEARCH REPORT

| International application No. |
|---|
| **PCT/JP2021/045238** |

**A. CLASSIFICATION OF SUBJECT MATTER**

*C25B 9/05*(2021.01)i; *C01B 3/00*(2006.01)i; *C25B 1/02*(2006.01)i; *C25B 9/00*(2021.01)i; *C25B 9/23*(2021.01)i; *C25B 15/00*(2006.01)i; *C25B 15/021*(2021.01)i; *C25B 15/023*(2021.01)i
FI: C25B9/05; C01B3/00 Z; C25B1/02; C25B9/00 Z; C25B15/00 302A; C25B15/023; C25B15/021; C25B9/23

According to International Patent Classification (IPC) or to both national classification and IPC

**B. FIELDS SEARCHED**

Minimum documentation searched (classification system followed by classification symbols)

C25B9/05; C01B3/00; C25B1/02; C25B9/00; C25B9/23; C25B15/00; C25B15/021; C25B15/023

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2019-183258 A (PANASONIC INTELLECTUAL PROPERTY MANAGEMENT CO., LTD.) 24 October 2019 (2019-10-24) | 1-10 |
| A | WO 2020/095543 A1 (PANASONIC INTELLECTUAL PROPERTY MANAGEMENT CO., LTD.) 14 May 2020 (2020-05-14) | 1-10 |
| A | JP 2019-99915 A (PANASONIC INTELLECTUAL PROPERTY MANAGEMENT CO., LTD.) 24 June 2019 (2019-06-24) | 1-10 |
| A | JP 2018-199852 A (PANASONIC INTELLECTUAL PROPERTY MANAGEMENT CO., LTD.) 20 December 2018 (2018-12-20) | 1-10 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **13 January 2022** | **25 January 2022** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 **Japan** | |
| | Telephone No. |

Form PCT/ISA/210 (second sheet) (January 2015)

**INTERNATIONAL SEARCH REPORT**
Information on patent family members

International application No.

**PCT/JP2021/045238**

| Patent document cited in search report | | | Publication date (day/month/year) | Patent family member(s) | | | Publication date (day/month/year) |
|---|---|---|---|---|---|---|---|
| JP | 2019-183258 | A | 24 October 2019 | US | 2019/0316603 | A1 | |
| | | | | EP | 3556906 | A1 | |
| | | | | CN | 110387556 | A | |
| WO | 2020/095543 | A1 | 14 May 2020 | US | 2020/0343567 | A1 | |
| | | | | CN | 111417746 | A | |
| JP | 2019-99915 | A | 24 June 2019 | US | 2019/0173114 | A1 | |
| | | | | EP | 3492630 | A1 | |
| | | | | CN | 109873182 | A | |
| JP | 2018-199852 | A | 20 December 2018 | (Family: none) | | | |

Form PCT/ISA/210 (patent family annex) (January 2015)

**EP 4 328 356 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6765060 B
- JP 2019210205 A